# NEUE EUROPÄISCHE PATENTSCHRIFT

(11) **EP 1 169 672 B2**
(45) Veröffentlichungstag und Bekanntmachung des Hinweises auf die Entscheidung über den Einspruch: **16.04.2008**
(45) Hinweis auf die Patenterteilung: 04.12.2002
(21) Anmeldenummer: 00909295.8
(22) Anmeldetag: 02.03.2000
(51) Int. Cl.: G05B 19/418

(54) **SYSTEM UND VERFAHREN ZUR QUALITÄTSKONTROLLE IN EINER PRODUKTIONSLINIE**
SYSTEM AND METHOD FOR CONTROLLING THE QUALITY OF A PRODUCT FAMILY
SYSTEME ET PROCEDE PERMETTANT LE CONTROLE DE QUALITE SUR UNE CHAINE DE PRODUCTION

(30) Priorität: 15.03.1999 DE 19911359; 16.06.1999 DE 19927498
(43) Veröffentlichungstag der Anmeldung: 09.01.2002
(73) Patentinhaber: Volkswagen Aktiengesellschaft, 38436 Wolfsburg (DE)
(72) Erfinder: SANDMANN, Ulrich, D-31228 Peine (DE); VOGEL, Wulf, D-88709 Meersburg (DE)
(74) Vertreter: Meyer, Enno
(86) Internationale Anmeldenummer: PCT/EP2000/001815
(87) Internationale Veröffentlichungsnummer: WO 2000/055699

(56) Entgegenhaltungen:
- US-A- 4 709 337
- US-A- 5 557 512
- US-A- 5 696 686
- US-A- 5 706 213
- Sascha Gerhards: "Entwicklung eines Konzepts zur Optimierung der papiergebundenen und papierlosen Informationsverarbeitung in der Montage eines PKW-Werks" (Betreuer: Dr.-Ing. E. Haller), Uni Karlsruhe, Diplomarbeit 07597001

## Beschreibung

Die Erfindung betrifft ein System und ein Verfahren zur Qualitätskontrolle in einer Produktionslinie mit einer Vielzahl von Arbeitsstationen zur Herstellung eines komplexen Produktes, insbesondere eines Kraftfahrzeuges.

Mit zunehmender Komplexität eines Produktes, wie es insbesondere bei elektronischen Geräten und Fahrzeugen der Fall ist, ist es zur Qualitätssicherung des Produktes nötig, aufgetretene Fehler und Beanstandungen, seien es defekte Montageteile oder während der Herstellung bzw. Montage aufgetretene Beschädigungen, schnell aufzufinden und zu systematisieren, um eine vollständige Beseitigung der Fehler und Beanstandungen zu gewährleisten.

Es sind verschiedene Verfahren bekannt geworden.

So wird in der US-Patentschrift US 4,709,337 ein Verfahren zur Qualitätsverbesserung und Fehlerberichtigung in einem Prozeß einer Montagelinie zur Montage von Fahrzeugen vorgeschlagen, wobei jede Arbeitsstation in der Montagelinie mit dezentralen Eingabeterminals ausgebildet ist, in die ein Operator die Beendigung eines erfolgreichen Arbeitsschrittes bzw. aufgetretene Fehler eingibt. Diese Daten werden an einen Zentralrechner weitergeleitet und dort gesammelt. Desweiteren sind an bzw. in der Montagelinie Nacharbeitsplätze vorgesehen, welche ebenfalls mit Datenterminals ausgestattet sind. An diese Terminals sendet der Zentralrechner entsprechende, in der Montagelinie aufgenommene Fehlerdaten. Nach erfolgter Fehlerbeseitigung wird eine entsprechende Information an den Zentralrechner über die Datenterminals des Nacharbeitsplatzes gegeben.

Die Eingabeterminals sind dabei einer bestimmten Arbeitsstation zugeordnet und weisen eine Reihe von Bedienelementen auf, wobei jedem Bedienelement ein bestimmter Fehler eines Arbeitsschrittes zugeordnet ist. Konnte der Arbeitsschritt nicht erfolgreich also nur fehlerbehaftet durchgeführt werden, betätigt der Operator das entsprechende Bedienelement und der Fehler erscheint auf einem Display.

Die Identifikation des jeweiligen Fahrzeuges geschieht über die Betätigung eines weiteren Bedienelementes, wodurch die gespeicherte Identifikationsnummer des nächsten Fahrzeuges aufgerufen wird.

Solche Terminals können nur eingeschränkt, nämlich an der jeweiligen Arbeitsstation benutzt werden. Tritt ein Fehler auf, der nicht durch ein Bedienelement gekennzeichnet ist, kann der Operator diesen Fehler nicht eingeben. Ähnliches gilt auch für an der entsprechenden Arbeitsstation unbemerkt gebliebene Fehler. Diese können an einer nachfolgende Montagestation ebenfalls nicht an den Zentralrechner gemeldet werden.

Ein ähnliches Verfahren zur Qualitätsverbesserung und Fehlerbeseitigung ist in der US-Patentschrift US 5,077,674 offenbart. Dieses unterscheidet sich insofern von dem Verfahren aus der US-Patentschrift US 4,709,337, daß das Eingabeterminal ein weiteres Bedienelement aufweist, mit dessen Betätigung signalisiert werden kann, daß die Montagearbeiten vollständig an einer Montagestation durchgeführt wurden, unabhängig davon, ob ein Fehler aufgetreten ist oder nicht.

Desweiteren ist aus der IEE 43, Jahrgang 1998, Nr. 12, Seite 44 bis 46, ein Verfahren zur Qualitätssicherung in der Endmontage von Kraftfahrzeugen bekannt. In den einzelnen Bereichen findet die Aufnahme bereichsbezogener Fehler über stationäre und mobile Eingabegeräte statt. Als stationäre Geräte dienen industrietaugliche PCs, die an solchen Arbeitsstationen zum Einsatz kommen, an denen sich das Fahrzeug nicht bewegt. Die mobilen Geräte führen entweder Personen mit sich oder sind einem Fahrzeug zugeordnet und damit jedermann an der Fertigungslinie zugänglich. Die Fehler bzw. Beanstandungen werden mit Hilfe von Touchscreen-basierenden Geräten aufgenommen, wobei sowohl eine grafische Eingabe als auch eine Eingabe mit Hilfe von Prüfprotokollen möglich ist. Die über die stationären und mobilen Geräte eingegebenen Fehlerdaten werden einer zentralen Einheit zugeleitet, welche diese Daten den entsprechenden Nacharbeitszonen zuführt. Außerdem kann eine Fehlerrückmeldung an die jeweilige Arbeitsstation erfolgen.

Die Druckschrift GERHARD S. : "Entwicklung eines Konzepts zur Optimierung der papiergebundenen und papier Losen Informationverarbeitung in der Montage eines PKW-Werks," Universität Karlsruhe, Diplomarbeit 07597001, betrifft eine Studie zur Entwicklung eines Konzepts zur Optimierung der papiergebundenen und papierlosen Informationsverarbeitung in einem PKW-Werk. Insbesondere betrifft die Druckschrift die Erfassung und Archivierung dokumentationspflichtiger Fahrzeugdaten, um beispielsweise Produkthaftungsansprüchen begegnen zu können. In diesem Zusammenhang wird in Kap. 7 der Druckschrift die Fehlererfassung und Nacharbeit mittels des sogenannten FENAS-Systems und in Kap. 10 die Dokumentation von Prüfdaten beschrieben.

Die Aufgabe der Erfindung ist, ein Verfahren und ein System zur Qualitätssicherung zu schaffen, mit deren Hilfe eine konsequente Aufnahme gefundener Fehler und Beanstandungen am Produkt in allen Arbeitsstationen der Produktionslinie, aber auch in der Produktionslinie nachgelagerten Stationen möglich ist, um eine rasche und systematische Fehlerbeseitigung zu gewährleisten.

Die Aufgabe wird durch die Merkmale der Patentansprüche 1 und 12 gelöst. Vorteilhafte Weiterbildungen und Ausgestaltungen sind in den Unteransprüchen dargestellt.

Die Vorteile der Erfindung liegen insbesondere in der großen Flexibilität der Dateneingabe, dort wo eine Beanstandung oder ein Fehler bemerkt wird, kann er auch eingegeben werden, der einfachen Handhabung der Eingabegeräte, der rückschauenden Fehlerdarstellung und somit der schnellen Beseitigung von routinemäßigen und systembehafteten Fehlern als auch der schnellen und konsequenten Fehlerübermittlung an nachgelagerte Stationen wie Nacharbeitsplätze.

Nachfolgend soll die Erfindung anhand eines Ausführungsbeispieles näher beschrieben werden. Die zugehörigen Zeichnungen zeigen:
- Fig. 1: schematische Darstellung des erfindungsgemäßen Systems zur Qualitätskontrolle,
- Fig. 2: einen Ablauf einer Dateneingabe in eine Eingabeeinrichtung,
- Fig. 3: ein Anzeigebild für eine Eingabeeinrichtung,
- Fig. 4: ein Anzeigebild für eine Eingabeeinrichtung,
- Fig. 5: ein Anzeigebild mit einer graphischen Darstellung für eine Eingabeeinrichtung,
- Fig. 6: ein Anzeigebild für Fehlerarten einer Eingabeeinrichtung,
- Fig. 7: einen weiteren Ablauf der Dateneingabe in eine Eingabeeinrichtung,
- Fig. 8: ein Anzeigebild für die Kennzeichnung von behobenen Fehlern einer Eingabeeinrichtung,
- Fig. 9: eine Ausgabeeinrichtung für eine Arbeitsstation in der Produktionslinie und
- Fig. 10: eine weitere Ausgabeeinrichtung für eine Arbeitsstation in der Produktionslinie.

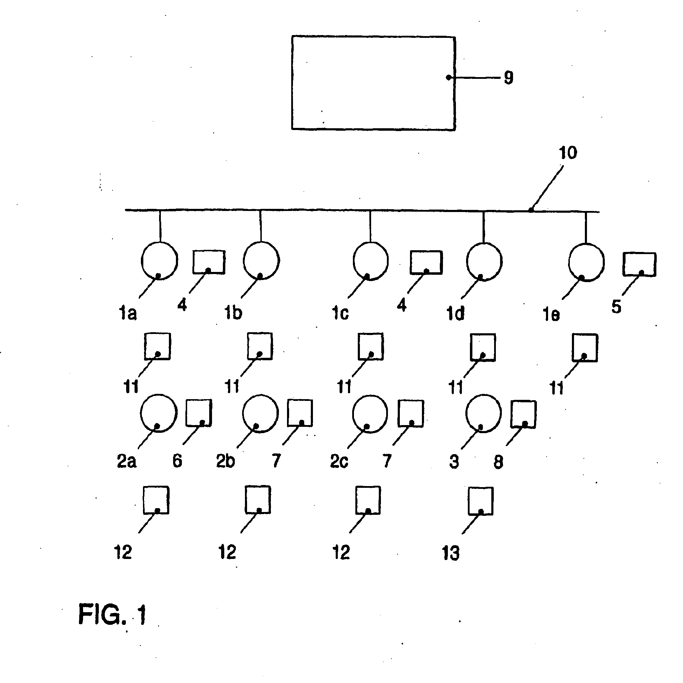

In Fig. 1 ist eine Produktionslinie, die schematisch als Linie 10 dargestellt ist, mit Arbeitsstationen 1 a bis 1 e einer Kraftfahrzeugmontage gezeigt, wobei die Anzahl der Arbeitsstationen nur ein Beispiel wiedergeben soll. Der Produktionslinie 10 sind Nacharbeitsplätze 2 a bis 2 c nachgelagert. Außerdem ist mit 3 eine Station einer territorial entfernten Werkstatt gekennzeichnet. Der Arbeitsstation 1 e ist ein stationäres Eingabegerät 5 zugeordnet. Desweiteren befinden sich an der Produktionslinie mobile Eingabegeräte 4, sogenannte Handheld-Geräte, die keiner Arbeitsstation 1 zugeordnet sind. Denkbar ist eine Zuordnung zu bestimmten Personen. Dies ist jedoch keine Bedingung. Die Eingabegeräte 6 und 7 als auch das Eingabegerät 8 an den Nacharbeitsplätzen 2 a bis 2 c und der Werkstatt 3 können sowohl mobil als auch stationär ausgebildet sein.

Die Eingabegeräte 4 bis 7 kommunizieren nach dem Ausführungsbeispiel mit der zentralen Verarbeitungseinrichtung 9 drahtlos, hier hat sich als vorteilhaft eine Funkverbindung herausgestellt. Das weit entfernte Eingabegerät 8 der Werkstatt ist im Ausführungsbeispiel über eine Datenleitung mit der zentralen Verarbeitungseinheit 9 verbunden.

Nach dem Daten über aufgetretene Fehler bzw. Beanstandungen in einzelne der Eingabegeräte 4 bis 8 eingegeben und an die zentrale Verarbeitungseinheit 9 übermittelt wurden, wertet diese die Daten nach bestimmten Kriterien und Prüfroutinen aus, z. B. nach der Fehlerart, der Fehlerhäufigkeit, dem Ort in der Produktionslinie, auf das Produkt bezogen und in welchem Zeitraum (beispielsweise in welcher Schicht) der Fehler entstanden ist. Nach ihrer Auswertung werden die ausgewerteten Daten nach definierten Vorgaben und Relevanz an die Ausgabeeinrichtungen 11, die Arbeitsstationen zugeordnet sind und nach anderen Vorgaben an die Ausgabeeinrichtungen 12 der Nacharbeitsplätze gesendet. Weitere spezielle Auswertekriterien können für die Ausgabeeinrichtung 13 der Werkstatt 3 vorgesehen sein.

Die Ausgabeeinrichtungen 11 sind vorzugsweise als Anzeigeeinrichtungen ausgebildet, die für das Personal der jeweiligen Arbeitsstation gut einsehbar sind. Im Ausführungsbeispiel kommen Plasma-Bildschirme zum Einsatz, auf denen die ausgewerteten Daten der an der jeweiligen Arbeitsstation 1 a bis 1 e aufgetretenen Fehler bzw. Beanstandungen angezeigt werden, so daß das Personal der Arbeitsstation eine Rückschau auf die an der Arbeitsstation geleistete Arbeit erhält. Auf die detaillierte Art der Anzeige wird im späteren noch eingegangen.

Die Ausgabeeinrichtungen 12 und 13 an den Nacharbeitsplätzen 2 a bis 2 c und in der Werkstatt 3 können ebenfalls Anzeigeeinrichtungen als auch beispielsweise Drucker sein, auch die Kombination von mehreren Ausgabeeinrichtungen ist denkbar. Hier werden die ausgewerteten Daten produktbezogen ausgegeben.

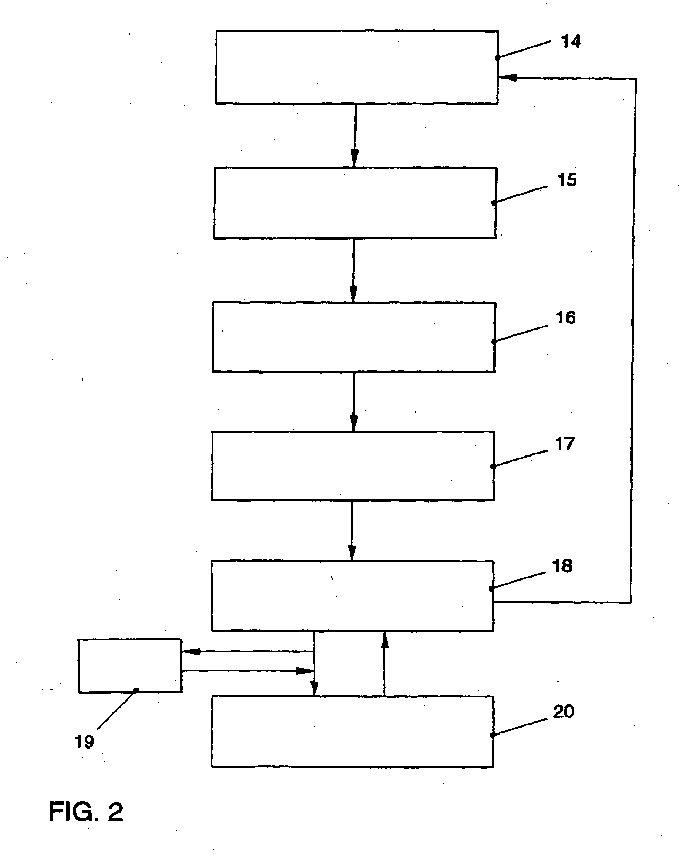

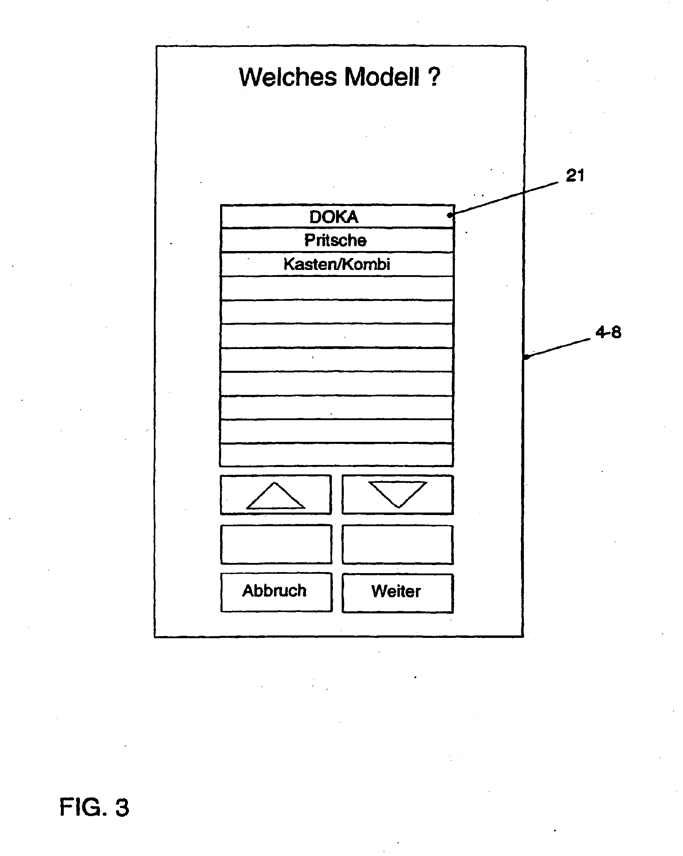

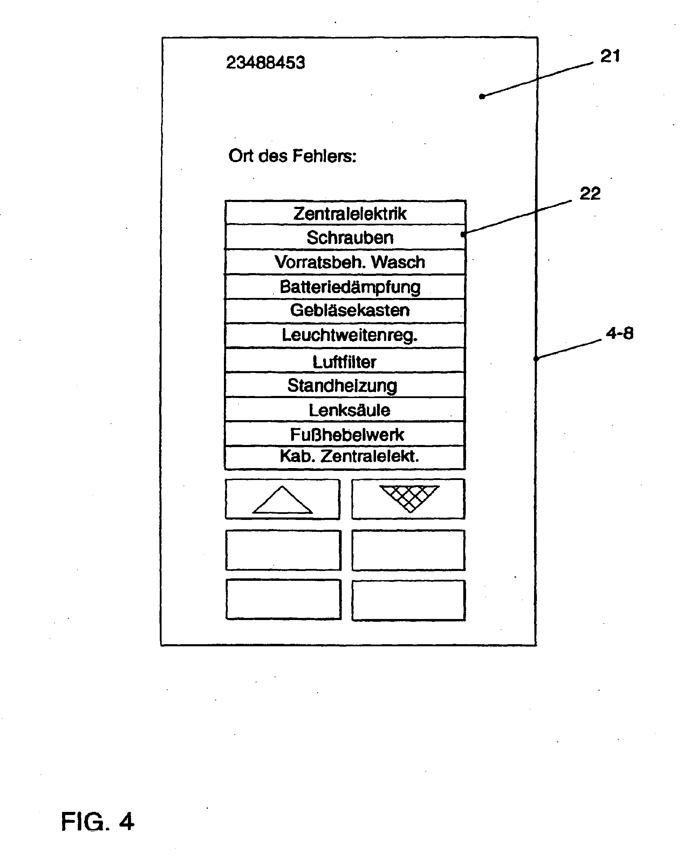

In Fig. 2 ist der Ablauf einer möglichen Eingaberoutine zur Eingabe von Fehlern und Beanstandungen in ein mobiles oder stationäres Eingabegerät 4 bis 8 dargestellt. Nach der Betätigung eines auf dem Eingabegerät vorgesehenen Bedienelementes oder einer Touchscreen-Eingabe startet die Eingaberoutine mit Schritt 14. Im Schritt 15 weist sich die Bedienperson über die Eingabe einer Kennung und eines Passwortes als Berechtigte aus. Der Ablauf springt auf Schritt 16, in dem das momentane Fahrzeug identifiziert wird, indem aus einem am Fahrzeug angeordneten Speichermedium eine Kennung vom Eingabegerät ausgelesen wird. Dies kann automatisch oder über die manuelle Auslösung eines Eingabebefehls geschehen. Im Schritt 17 wird das Fahrzeugmodell ausgewählt, in dem auf der Anzeigeeinrichtung 21 des Eingabegerätes (Fig. 3) eine Auswahl der in der Produktionslinie gefertigten Fahrzeuge erscheint. Der Schritt 17 kann entfallen, wenn die Fahrzeugkenn-Nummer bereits eine entsprechende Kennung für das Fahrzeugmodell enthält. Im Schritt 18 folgt nun die Auswahl des Fehlerortes am Fahrzeug. Diese Auswahl kann ebenfalls über ein Auswahlmenü 22 auf der Anzeigeeinrichtung 21 durchgeführt werden, indem über eine Touchscreen-Eingabe bzw. über eine Menüabfrage mit Hilfe eines manuellen Bedienelementes der entsprechende Fehlerort ausgewählt wird (Fig. 4).

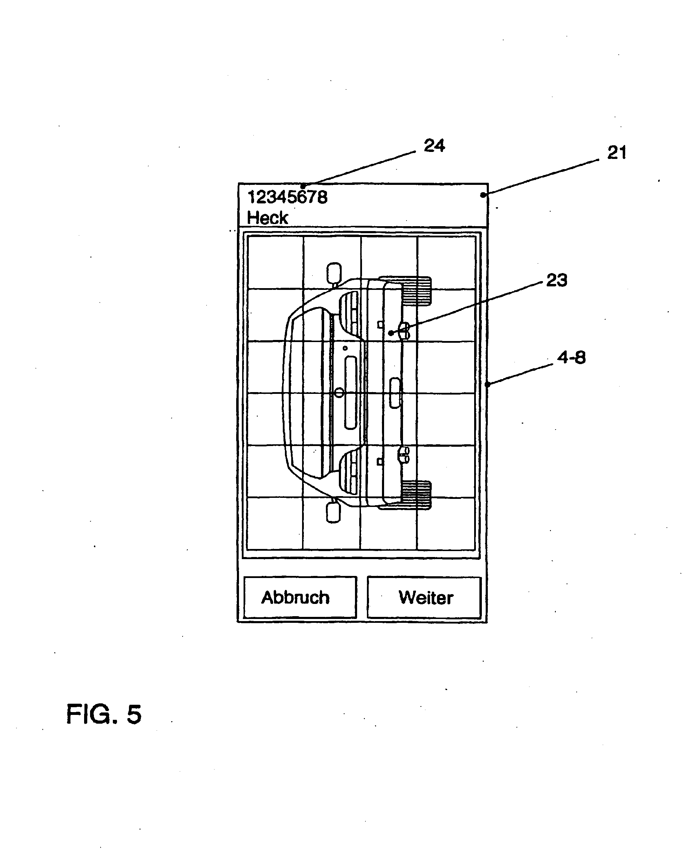

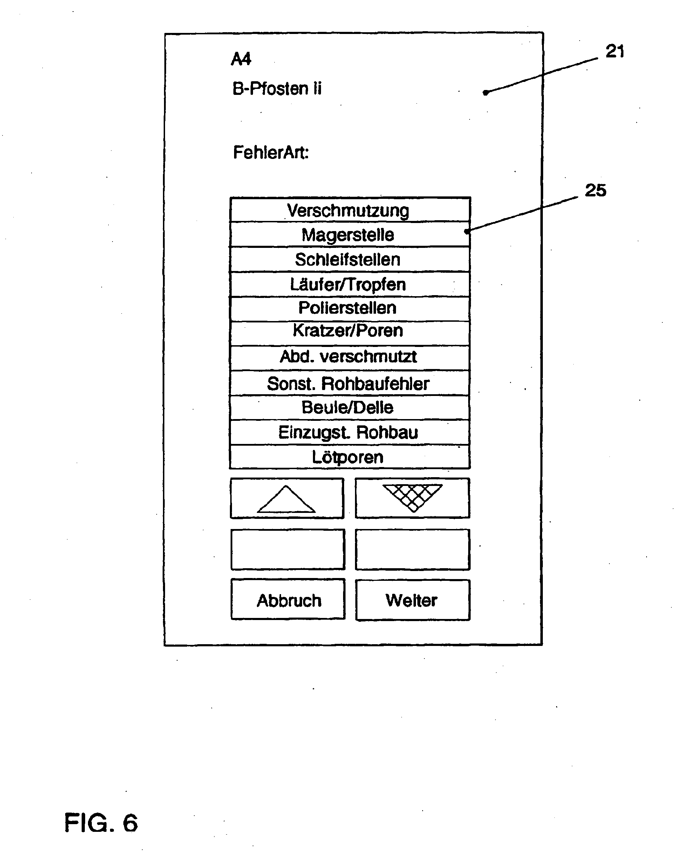

Insbesondere bei solchen Bauteilen, wie Motorhauben, Kotflügeln usw., an denen eine Beschädigung bzw. eine Beanstandung nur schwer über ein Auswahlmenü auf einen genauen Fehlerort zu definieren ist, wird das jeweilige Bauteil 23, in bestimmten Fällen auch das gesamte Produkt, auf der Anzeigeeinrichtung 21 des Eingabegerätes 4 bis 8 grafisch dargestellt. Ein Beispiel zeigt Fig. 5. Hier ist die Heckpartie 23 des beurteilten Fahrzeuges neben der Fahrzeugkenn-Nummer 24 dargestellt. Über eine Touchscreen-Eingabe auf der Anzeigeeinrichtung 21 kann die Bedienperson den Fehlerort sehr genau eingrenzen. Im nunmehr folgenden Schritt 20 (Fig. 2) erfolgt die Bestimmung der Fehlerart über ein Auswahlmenü 25 auf der Anzeigeeinrichtung 21 (Fig. 6).

Nach Eingabe der Fehlerart springt der Ablauf automatisch auf Schritt 18, Eingabe des Fehlerortes, und zwar solange, bis die Bedienperson den Eingabeablauf durch die Betätigung eines Bedienelementes "Verlassen" abbricht.

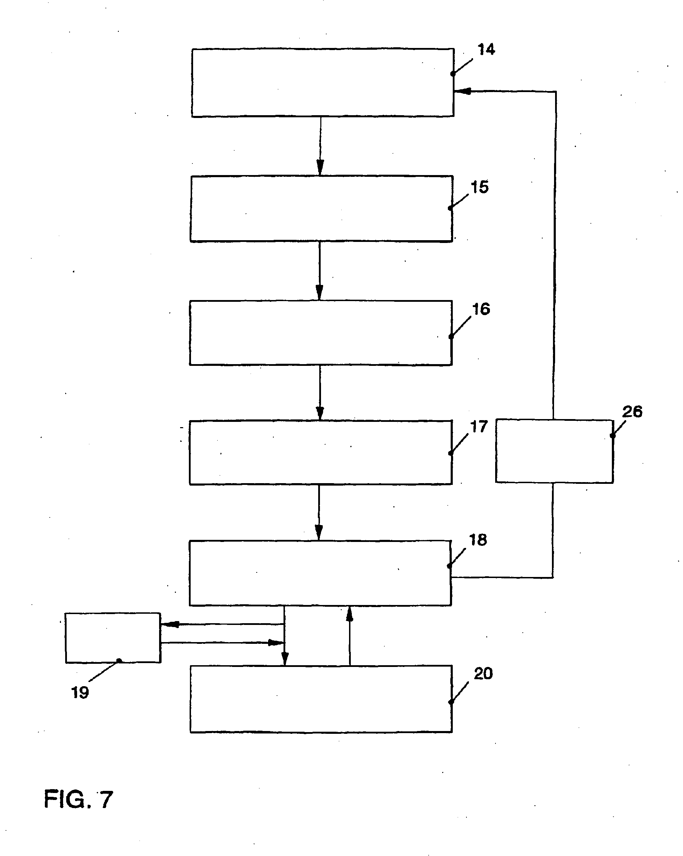

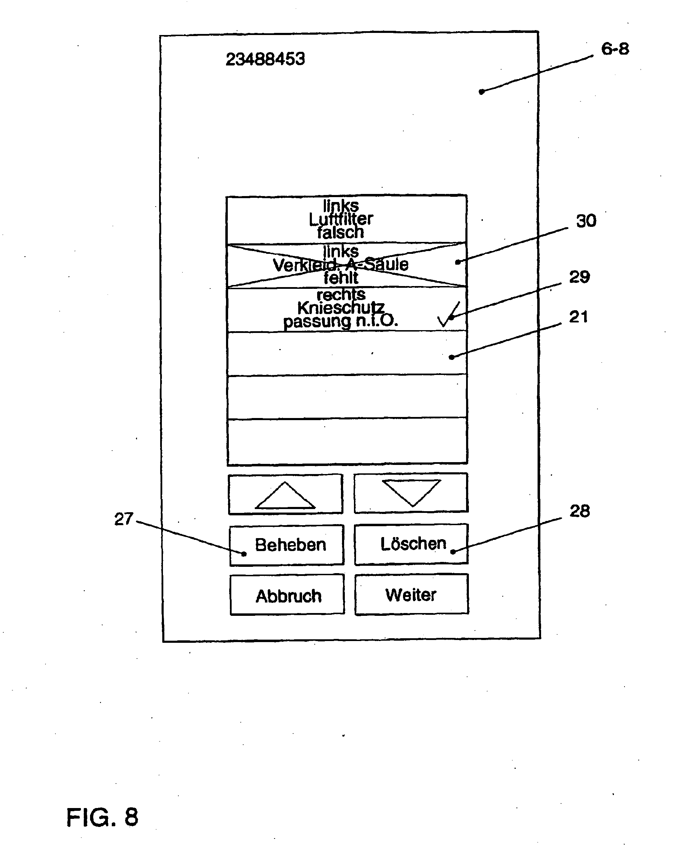

Fig. 7 zeigt den Ablauf einer möglichen Eingaberoutine zur Eingabe bzw. Korrektur von Fehlern oder Beanstandungen in ein stationäres Eingabegerät 6 bis 8 eines Nacharbeitsplatzes 2 oder in einer Werkstatt 3. Die Eingabe von Fehlern erfolgt dabei ebenso wie bei der Eingaberoutine gemäß Fig. 2. Zusätzlich besteht jedoch die Möglichkeit, behobene Fehler als solche zu kennzeichnen oder zu löschen. Nach dem Start 14 und der Eingabe der Berechtigung im Schritt 15 wird im Schritt 16 wiederum das Fahrzeug durch Übernahme der Fahrzeugkenn-Nummer identifiziert und im Schritt 17 das Fahrzeugmodell bzw. die Fahrzeugausstattung eingegeben (wenn diese noch nicht in der Fahrzeugkennung enthalten ist). Nun wird im Schritt 18 der Fehlerort ausgewählt und über eine Eingabe im Schritt 26 der Fehler gelöscht bzw. als beseitigt gekennzeichnet. Dazu können am Eingabegerät 6 bis 8 manuelle Bedienelemente 27, 28 vorgesehen sein bzw. kann eine Touchscreen-Eingabe auf der Anzeigeeinrichtung 21 erfolgen (Fig. 8). Auf der Anzeigeeinrichtung 21 wird der Fehler als behoben 29 oder als gelöscht 30 dargestellt.

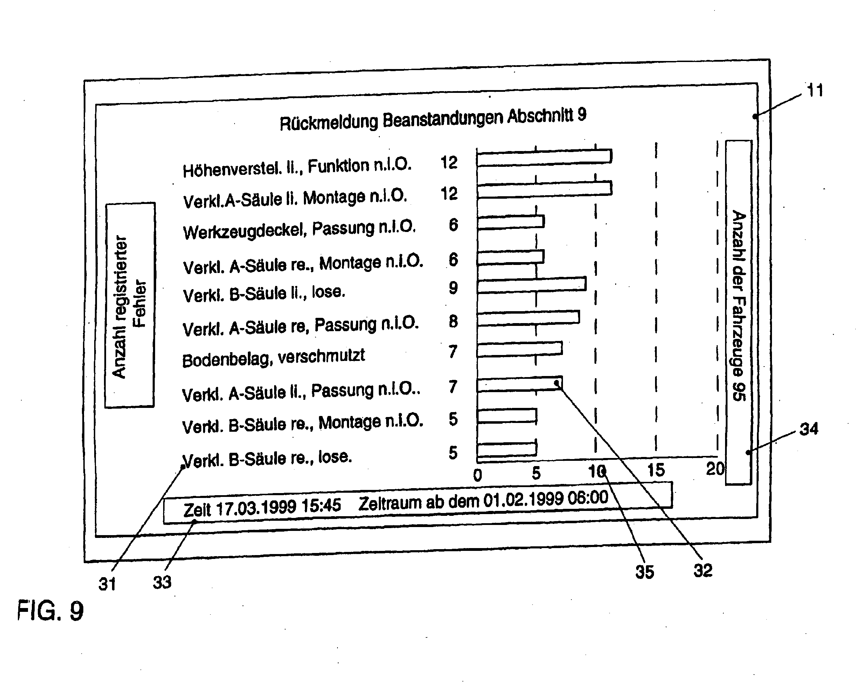

In Fig. 9 ist eine Ausgabeeinrichtung 11 einer Arbeitsstation in der Produktionslinie der Fahrzeugmontage gezeigt. Die Ausgabeeinrichtung ist als LCD-Bildschirm ausgebildet und zeigt eine Liste 31, der an der Arbeitsstation aufgetretenen Beanstandungen mit Fehlerort und Fehlerart sowie ein der Liste 31 zugeordnetes Balkendiagramm 32, das die Häufigkeit der Fehler in Bezug zum aufgetretenen Fehler aufzeigt. Im Balkendiagramm 32 sind die Fehler klassifiziert beispielsweise, ob es sich um einen durch den Arbeitsablauf hervorgerufenen Fehler handelt. Desweiteren ist ein Anzeigefeld 33, das den Erfassungszeitraum wiedergibt und ein Anzeigefeld 34, das die Anzahl der im Erfassungszeitraum gefertigten Fahrzeuge zeigt, vorgesehen.

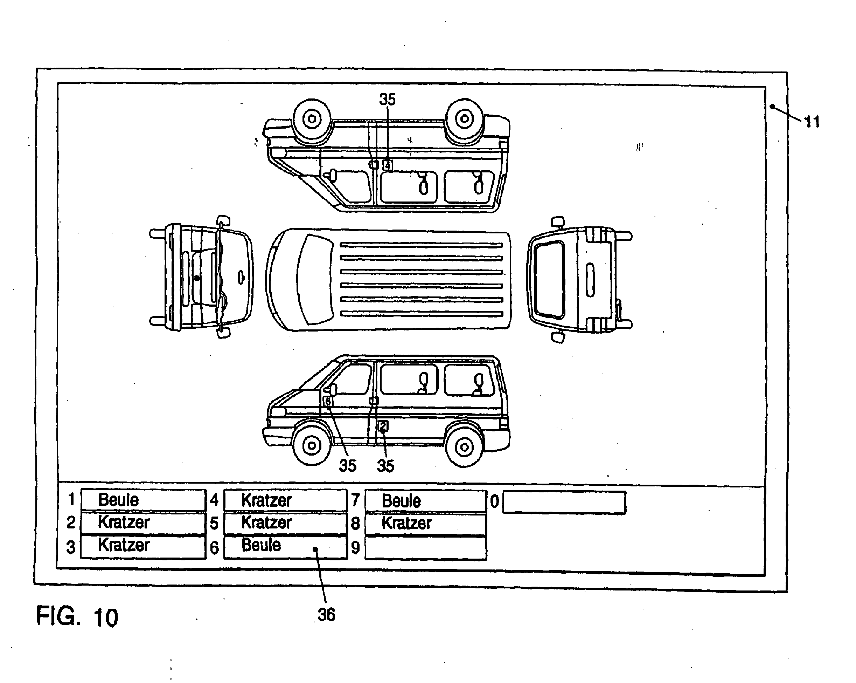

Eine andere Darstellungsart der an einer Arbeitsstation aufgetretenen Fehler zeigt Fig. 10. Auf der Ausgabeeinrichtung 11 ist das gefertigte Fahrzeug zweidimensional in einer sogenannten "Schmetterlingsdarstellung" gezeigt, wobei die Fehler 35 in ihrer Anzahl direkt auf der Darstellung eingetragen sind. Beispielsweise über unterschiedliche Farbdarstellungen der Fehler erfolgt zusätzlich eine Klassifizierung derselben. Desweiteren ist ein Anzeigefeld 36 vorgesehen, das eine Legende der Fehlerarten bezogen auf den jeweilig angezeigten Fehler wiedergibt.

## Patentansprüche

1. System zur Qualitätskontrolle in einer Produktionslinie (10) mit einer Vielzahl von Arbeitsstationen (1) zur Herstellung eines komplexen Produktes, insbesondere eines Kraftfahrzeuges,
mit einer Anzahl von stationären und/oder mobilen Eingabegeräten (4 - 8), in welche Daten aufgetretener Fehler oder Beanstandungen eingebbar sind und die die eingegebenen Daten mindestens einer zentralen Verarbeitungseinheit (9) übermitteln, welche die Daten nach definierten Auswertekriterien auswertet und die ausgewerteten Daten in Abhängigkeit ihrer Relevanz an Ausgabeeinrichtungen (11 - 13) der Produktionslinie nachgeschalteter Stationen (2, 3) und der betreffenden Arbeitsstationen (1) sendet, welche die ausgewerteten Daten nach definierten Auswertekriterien ausgeben,
**dadurch gekennzeichnet, daß**
die Ausgabeeinrichtungen (11-13) der Produktionslinie Anzeigeeinrichtungen sind, die einer jeweiligen Arbeitsstation zugeordnet sind, wobei die ausgewerteten Daten auf den einer jeweiligen Arbeitsstation zugeordneten Anzeigeeinrichtungen (11) zumindest nach der Fehlerhäufigkeit und/oder der Fehlerart und /oder dem Fehlerort am Produkt in bezug auf die an der jeweiligen Arbeitsstation (1) durchzuführenden Arbeitsschritte anzeigbar sind.

2. System zur Qualitätskontrolle nach Anspruch 1, **dadurch gekennzeichnet, daß** die Datenübertragung zwischen den stationären und/oder den mobilen Eingabegeräten (3 - 8) und der zentralen Verarbeitungseinheit (9) und/oder zwischen der zentralen Verarbeitungseinrichtung (9) und den Ausgabeeinrichtungen (11 - 13) über eine Funkverbindung erfolgt.

3. System zur Qualitätskontrolle nach Anspruch 1 oder 2, **dadurch gekennzeichnet, daß** die Daten der aufgetretenen Fehler auf das jeweilige Produkt bezogen in die stationären und/oder mobilen Eingabegeräte (4 - 8) eingebbar sind, wobei dazu eine elektronische Produktidentifizierung vom Eingabegerät (4 - 8) durch Lesen eines am Produkt gespeicherten Identifizierungscodes erfolgt.

4. System zur Qualitätskontrolle nach einem der Ansprüche 1 bis 3, **dadurch gekennzeichnet, daß** in den Eingabegeräten (4 - 8) Teile und/oder Baugruppen des Produktes und/oder das Produkt graphisch gespeichert und auf einer integrierten Anzeigeeinrichtung (21) anzeigbar sind und die Daten der aufgetretenen Fehler oder Beanstandungen über eine Touchscreen-Eingabe auf dem angezeigten Teil bzw. der angezeigten Baugruppe eingebbar sind.

5. System zur Qualitätskontrolle nach Anspruch 4, **dadurch gekennzeichnet, daß** die Teile und/oder Baugruppen und/oder das Produkt auf der Anzeigeeinrichtung (21) zwei- oder dreidimensional darstellbar sind.

6. System zur Qualitätskontrolle nach einem der Ansprüche 1 bis 5, **dadurch gekennzeichnet, daß** die Daten der aufgetretenen Fehler oder Beanstandungen über eine Menüabfrage in die stationären und /oder mobilen Eingabegeräte (4 - 8) eingebbar sind.

7. System zur Qualitätskontrolle nach einem der Ansprüche 1 bis 6, **dadurch gekennzeichnet, daß** die Auswerteeinheit (9) die übermittelten Daten zumindest nach der Fehlerart und/oder der Fehlerhäufigkeit und/oder dem Ort des aufgetretenen Fehlers in der Produktionslinie und/oder dem Ort des aufgetretenen Fehlers am Produkt und/oder dem Entstehungszeitraum und/oder produktbezogen auswertet.

8. System zur Qualitätskontrolle nach einem der Ansprüche 1 bis 7, **dadurch gekennzeichnet, daß** die Ausgabeeinrichtungen (11-13) die ausgewerteten Daten zumindest nach der Fehlerart und/oder der Fehlerhäufigkeit und/oder dem Ort des aufgetretenen Fehlers in der Produktionslinie und/oder dem Ort des aufgetretenen Fehlers am Produkt und/oder dem Entstehungszeitraum und/oder produktbezogen ausgeben.

9. System zur Qualitätskontrolle nach Anspruch 8, **dadurch gekennzeichnet, daß** die Anzeigeeinrichtungen als Bildschirme ausgebildet sind.

10. System zur Qualitätskontrolle nach einem der vorangegangenen Ansprüche, **dadurch gekennzeichnet, daß** auf der Anzeigeeinrichtung (11 - 13) der jeweiligen Arbeitsstation (1) das Produkt bzw. Produktteile in bezug auf die an der Arbeitsstation durchzuführenden Arbeitsschritte graphisch darstellbar sind und die an der Arbeitsstation aufgetretenen Fehler zumindest nach der Fehlerhäufigkeit und/oder der Fehlerart und/oder dem Fehlerort am Produkt auf der graphischen Darstellung des Produktes bzw. des Produktteiles anzeigbar sind.

11. System zur Qualitätskontrolle nach einem der vorangegangenen Ansprüche, **dadurch gekennzeichnet, daß** die der Produktionslinie nachgeschalteten Stationen Nacharbeitsplätze (2) und/oder Werkstätten (3) und/oder Vertriebseinheiten sind, auf deren Ausgabeeinrichtungen (12, 13) die ausgewerteten Daten produktbezogen ausgebbar sind.

12. Verfahren zur Qualitätskontrolle in einer Produktionslinie (10) mit einer Vielzahl von Arbeitsstationen (1) zur Herstellung eines komplexen Produktes, insbesondere eines Kraftfahrzeuges, **gekennzeichnet durch** die Schritte:
Eingabe von Daten aufgetretener Fehler bzw. Beanstandungen an einem Produkt in ein stationäres /oder mobiles Eingabegerät (4 - 8),
Übermittlung der eingegebenen Daten an mindestens eine zentrale Verarbeitungseinheit (9),
Auswertung der übermittelten Daten in der zentralen Verarbeitungseinheit (9) nach definierten Auswertekriterien,
Übertragung der ausgewerteten Daten in Abhängigkeit ihrer Relevanz an Ausgabeeinrichtungen (11 - 13) in der Produktionslinie (10) und/oder der Produktionslinie nachgeschalteter Stationen (2, 3) und
Ausgabe der ausgewerteten Daten nach definierten Ausgabekriterien **durch** die Ausgabeeinrichtungen (11 - 13), wobei
die Datenübertragung zwischen den stationären und den mobilen Eingabegeräten (4 - 8) und der zentralen Verarbeitungseinheit (9) und/oder zwischen der zentralen Verarbeitungseinrichtung (9) und den Ausgabeeinrichtungen (11 - 13) über eine Funkverbindung durchgeführt wird,
**dadurch gekennzeichnet, dass**
die ausgewerteten Daten auf den einer jeweiligen Arbeitsstation (1) der Produktionslinie (10) zugeordneten Ausgabeeinrichtungen (11) zumindest nach der Fehlerhäufigkeit und/oder der Fehlerart und/oder dem Fehlerort in bezug auf die an der Arbeitsstation (1) durchzuführenden Arbeitsschritte angezeigt werden.

13. Verfahren nach Anspruch 12, **dadurch gekennzeichnet, daß** die Daten der aufgetretenen Fehler bzw. Beanstandungen auf das jeweilige Produkt bezogen in die stationären und/oder mobilen Eingabegeräte (4 - 8) eingegeben werden, wobei zuvor eine elektronische Produktidentifizierung vom Eingabegerät (4 - 8) durch Lesen eines am Produkt gespeicherten Identifizierungscode durchgeführt wird.

14. Verfahren nach einem der Ansprüche 12 oder 13, **dadurch gekennzeichnet, daß** in den Eingabegeräten (4 - 8) Teile und/oder Baugruppen des Produktes und/oder das Produkt graphisch gespeichert werden und auf einer Anzeigeeinrichtung (21) der Eingabegeräte (4 - 8) angezeigt werden und die Daten der aufgetretenen Fehler oder Beanstandungen über eine Touchscreen-Eingabe auf dem angezeigten Teil oder Baugruppe oder Produkt eingegeben werden.

15. Verfahren nach Anspruch 14, **dadurch gekennzeichnet, daß** die Teile, Baugruppen und das Produkt auf der Anzeigeeinrichtung (21) zwei- oder dreidimensional dargestellt werden.

16. Verfahren nach einem der Ansprüche 12 bis 15, **dadurch gekennzeichnet, daß** die Daten der aufgetretenen Fehler oder Beanstandungen über eine Menüabfrage in die stationären und/oder mobilen Eingabegeräte (4 - 8) eingegeben werden.

17. Verfahren nach einem der Ansprüche 12 bis 16, **dadurch gekennzeichnet, daß** die Daten der aufgetretenen Fehler oder Beanstandungen unabhängig von der verursachenden Arbeitsstation (1) in der Produktionslinie (10) als auch an der Produktionslinie nachgeschalteten Stationen (2, 3) eingegeben werden.

18. Verfahren nach einem der Ansprüche 12 bis 17, **dadurch gekennzeichnet, daß** die übermittelten Daten in der Auswerteeinheit (9) zumindest nach der Fehlerart und/oder der Fehlerhäufigkeit und/oder dem Ort des aufgetretenen Fehlers in der Produktionslinie (10) und/oder dem Ort des aufgetretenen Fehlers am Produkt und/oder dem Entstehungszeitraum und/oder produktbezogen ausgewertet werden.

19. Verfahren nach einem der Ansprüche 12 bis 18, **dadurch gekennzeichnet, daß** die ausgewerteten Daten durch die Ausgabeeinrichtungen (11 - 13) zumindest nach der Fehlerart und/oder der Fehlerhäufigkeit und/oder dem Ort des aufgetretenen Fehlers in der Produktionslinie (10) und/oder dem Ort des aufgetretenen Fehlers am Produkt und/oder dem Entstehungszeitraum und/oder produktbezogen ausgegeben werden

20. Verfahren nach einem der Ansprüche 12 bis 19, **dadurch gekennzeichnet, daß** die Ausgabeeinrichtung (11) der jeweiligen Arbeitsstation (1) das Produkt bzw. Produktteile in bezug auf die an der Arbeitsstation (1) durchzuführenden Arbeitsschritte graphisch ausgegeben werden und die an der Arbeitsstation (1) aufgetretenen Fehler oder Beanstandungen auf der graphischen Darstellung des Produktes bzw. des Produktteiles dargestellt werden.

21. Verfahren nach einem der Ansprüche 12 bis 20, **dadurch gekennzeichnet, daß** durch die Ausgabeeinrichtungen (12, 13) der der Produktionslinie nachgeschalteten Stationen (2, 3) die ausgewerteten Daten produktbezogen ausgegeben werden.

## Claims

1. System for controlling quality in a production line (10) having a multiplicity of workstations (1) for manufacturing a complex product, in particular a motor vehicle, having a number of fixed and/or mobile input devices (4-8) in which data relating to faults or complaints which have occurred can be input and which transfer the input data to at least one central processing unit (9) which evaluates the data according to defined evaluation criteria and transmits the evaluated data, as a function of its relevance, to output devices (11-13) of stations (2, 3) connected downstream of the production line and to the respective workstations (1) which output the evaluated data according to defined evaluation criteria, **characterized in that** the output devices (11-13) of the production line are display devices which are assigned to a respective workstation, wherein the evaluated data can be displayed on the display devices (11) assigned to a respective workstation, at least in accordance with the frequency of a fault and/or the type of fault and/or the location of a fault on the product in relation to the work steps to be carried out at the respective workstation (1).

2. System for controlling quality according to Claim 1, **characterized in that** the transmission of data between the fixed and/or the mobile input devices (3-8) and the central processing unit (9) and/or between the central processing device (9) and the output devices (11-13) is carried out via a radio link.

3. System for controlling quality to Claim 1 or 2, **characterized in that** the data relating to the faults which have occurred can be input into the fixed and/or mobile input devices (4-8) with reference to the respective product, for which purpose an electronic product identification is carried out by the input device (4-8) by reading an identification code stored on the product.

4. System for controlling quality according to one of Claims 1 to 3, **characterized in that** parts and/or assemblies of the product and/or the product are stored graphically in the input devices (4-8) and can be displayed on an integrated display device (21), and the data relating to the faults or complaints which have occurred can be input by means of touchscreen inputting on the displayed part or the displayed assembly.

5. System for controlling quality according to Claim 4, **characterized in that** the parts and/or assemblies and/or the product can be represented two-dimensionally or three-dimensionally on the display device (21).

6. System for controlling quality according to one of Claims 1 to 5, **characterized in that** the data relating to the faults or complaints which have occurred can be input into the fixed and/or mobile input devices (4-8) by means of a menu interrogation.

7. System for controlling quality according to one of Claims 1 to 6, **characterized in that** the evaluation unit (9) evaluates the transferred data at least in accordance with the type of fault and/or the frequency of a fault and/or the location of the fault which has occurred in the production line and/or the location of the fault which has occurred on the product and/or the period when it came about and/or in a product-related fashion.

8. System for controlling quality according to one of Claims 1 to 7, **characterized in that** the output devices (11-13) output the evaluated data at least in accordance with the type of fault and/or the frequency of a fault and/or the location of the fault which has occurred in the production line and/or the location of the fault which has occurred on the product and/or the period when it came about and/or in a product-related fashion.

9. System for controlling quality according to Claim 8, **characterized in that** the display devices are embodied as screens.

10. System for controlling quality according to one of the preceding claims, **characterized in that** the product or product parts can be graphically represented on the display device (11-13) of the respective workstation (1) in relation to the work steps to be carried out at the workstation, and the faults which have occurred at the workstation can be displayed on the graphic representation of the product or of the product part at least in accordance with the frequency of a fault and/or the type of fault and/or the location of a fault on the product.

11. System for controlling quality according to one of the preceding claims, **characterized in that** the stations which are connected downstream of the production line are reworking stations (2) and/or workstations (3) and/or sales units on whose output devices (12, 13) the evaluated data can be output in a product-related fashion.

12. Method for controlling quality in a production line (10) having a multiplicity of workstations (1) for manufacturing a complex product, in particular a motor vehicle, **characterized by** the following steps:
inputting of data relating to faults or complaints which have occurred in a product into a fixed /or mobile input device (4-8),
transfer of the input data to at least one central processing unit (9),
evaluation of the transferred data in the central processing unit (9) according to defined evaluation criteria,
transmission of the evaluated data, as a function of its relevance, to output devices (11-13) in the production line (10) and/or stations (2, 3) connected downstream of the production line, and
outputting of the evaluated data by the output devices (11-13) in accordance with defined output criteria, wherein the transmission of data between the fixed and the mobile input devices (4-8) and the central processing unit (9) and/or between the central processing device (9) and the output devices (11-13) is carried out via a radio link,
**characterized in that** the evaluated data is displayed on the output devices (11) assigned to a respective workstation (1) of the production line (10), at least in accordance with the frequency of a fault and/or the type of fault and/or the location of a fault in relation to the work steps to be carried out at the workstation (1).

13. Method according to Claim 12, **characterized in that** the data relating to the faults or complaints which have occurred are input in to the fixed and mobile input devices (4-8) with reference to the respective product, an electronic product identification being carried out before by the input device (4-8) by reading an identification code stored on the product.

14. Method according to either of Claims 12 and 13, **characterized in that** parts and/or assemblies of the product and/or the product are stored graphically in the input devices (4-8) and displayed on a display device (21) of the input devices (4-8), and the data relating to the faults or complaints which have occurred is input by means of touchscreen inputting on the displayed part or assembly or product.

15. Method according to Claim 14, **characterized in that** the parts, assemblies and the product are represented two-dimensionally or three-dimensionally on the display device (21).

16. Method according to one of Claims 12 to 15, **characterized in that** the data relating to the faults or complaints which have occurred is input into the fixed and/or mobile input devices (4-8) by means of a menu interrogation.

17. Method according to one of Claims 12 to 16, **characterized in that** the data relating to the faults or complaints which have occurred are input independently of the workstation (1) causing them in the production line (10) and at the stations (2, 3) which are connected downstream of the production line.

18. Method according to one of Claims 12 to 17, **characterized in that** the data transferred in the evaluation unit (9) is evaluated at least in accordance with the type of fault and/or the frequency of a fault and/or the location of the fault which has occurred in the production line (10) and/or the location of the fault which has occurred on the product and/or the period when it came about and/or in a product-related fashion.

19. Method according to one of Claims 12 to 18, **characterized in that** the evaluated data is output by the output devices (11-13) at least in accordance with the type of fault and/or the frequency of a fault and/or the location of the fault which has occurred in the production line (10) and/or the location of the fault which has occurred on the product and/or the period when it came about and/or in a product-related fashion.

20. Method according to one of Claims 12 to 19, **characterized in that** the output device (11) of the respective workstation (1) graphically are output the product or product parts in relation to the work steps to be carried out at the workstation (1), and the faults or complaints which have occurred at the workstation (1) are represented on the graphic representation of the product or the product part.

21. Method according to one of Claims 12 to 20, **characterized in that** the evaluated data is output in a product-related fashion by the output devices (12, 13) of the stations (2, 3) which are connected downstream of the production line.

## Revendications

1. Système de contrôle de qualité dans une chaîne de production (10) comprenant une pluralité de postes de travail (1) pour fabriquer un produit complexe, en particulier un véhicule automobile, comprenant :
un certain nombre d'appareils d'entrée fixes et/ou mobiles (4-8), dans lesquels peuvent être saisies des données sur les défauts apparus ou les réclamations et qui transfèrent les données saisies à au moins une unité centrale de traitement (9), qui exploite les données selon des critères d'exploitation définis et envoie les données exploitées en fonction de leur importance à des dispositifs de sortie (11-13) de postes (2,3) situés en aval de la chaîne de production et aux postes de travail (1) concernés, qui délivrent les données exploitées selon des critères d'exploitation définis, **caractérisé en ce que** les dispositifs de sortie (11-13) de la chaîne de production sont des dispositifs d'affichage qui sont affectés à un poste de travail respectif, les données exploitées pouvant être affichées sur les dispositifs d'affichage (11) affectés à un poste de travail respectif au moins en fonction de la fréquence du défaut et/ou du type de défaut et/ou de l'emplacement du défaut sur le produit par rapport aux étapes de travail qui sont à effectuer sur le poste de travail respectif (1).

2. Système de contrôle de qualité selon la revendication 1, **caractérisé en ce que** le transfert de données entre les appareils d'entrée fixes et/ou mobiles (3-8) et l'unité centrale de traitement (9) et/ou entre l'unité centrale de traitement (9) et les dispositifs de sortie (11-13) se fait via une liaison radio.

3. Système de contrôle de qualité selon la revendication 1 ou 2, **caractérisé en ce que** les données sur les défauts apparus concernant le produit respectif peuvent être saisies dans les appareils d'entrée fixes et/ou mobiles (4-8), une identification électronique de produit étant effectuée à cet effet par le poste d'entrée (4-8) par lecture d'un code d'identification mémorisé sur le produit.

4. Système de contrôle de qualité selon l'une quelconque des revendications 1 à 3, **caractérisé en ce que** des pièces et/ou des ensembles de pièces du produit et/ou le produit sont mémorisés graphiquement dans les appareils d'entrée (4-8) et peuvent être affichés sur un dispositif d'affichage intégré (21) et les données sur les défauts apparus ou les réclamations peuvent être saisies par entrée sur un écran tactile en pressant sur la pièce, respectivement l'ensemble de pièces affiché(e).

5. Système de contrôle de qualité selon la revendication 4, **caractérisé en ce que** les pièces et/ou les ensembles de pièces et/ou le produit peuvent être représentés en deux ou trois dimensions sur le dispositif d'affichage (21).

6. Système de contrôle de qualité selon l'une quelconque des revendications 1 à 5, **caractérisé en ce que** les données sur les défauts apparus ou les réclamations peuvent être saisies dans les appareils d'entrée fixes et/ou mobiles (4-8) en interrogeant un menu.

7. Système de contrôle de qualité selon l'une quelconque des revendications 1 à 6, **caractérisé en ce** l'unité d'exploitation (9) exploite les données transférées au moins en fonction du type de défaut et/ou de la fréquence du défaut et/ou de l'emplacement du défaut apparu dans la chaîne de production et/ou de l'emplacement du défaut apparu sur le produit et/ou de la période d'apparition et/ou par rapport au produit.

8. Système de contrôle de qualité selon l'une quelconque des revendications 1 à 7, **caractérisé en ce** les dispositifs de sortie (11-13) délivrent les données exploitées au moins en fonction du type de défaut et/ou de la fréquence du défaut et/ou de l'emplacement du défaut apparu dans la chaîne de production et/ou de l'emplacement du défaut apparu sur le produit et/ou de la période d'apparition et/ou par rapport au produit.

9. Système de contrôle de qualité selon la revendication 8, **caractérisé en ce que** les dispositifs d'affichage se présentent sous la forme d'écrans de visualisation.

10. Système de contrôle de qualité selon l'une quelconque des revendications précédentes, **caractérisé en ce que** le produit, respectivement des pièces du produit peuvent être représentées graphiquement sur le dispositif d'affichage (11-13) du poste de travail respectif (1) par rapport aux étapes de travail à effectuer dans le poste de travail et les défauts apparus dans le poste de travail peuvent être affichés au moins en fonction de la fréquence du défaut et/ou du type de défaut et/ou de l'emplacement du défaut sur le produit, sur la représentation graphique du produit, respectivement de la pièce de produit.

11. Système de contrôle de qualité selon l'une quelconque des revendications précédentes, **caractérisé en ce que** les postes situés en aval de la chaîne de production sont des emplacements de retouche (2) et/ou des ateliers (3) et/ou des unités de vente sur les dispositifs de sortie (12, 13) desquels les données exploitées peuvent être délivrées par rapport au produit.

12. Procédé de contrôle de qualité dans une chaîne de production (10) comprenant une pluralité de postes de travail (1) pour fabriquer un produit complexe, en particulier un véhicule automobile, **caractérisé par** les étapes suivantes:
saisie de données de défauts apparus, respectivement de réclamations sur un produit dans un appareil d'entrée fixe et/ou mobile (4-8),
transfert des données saisies à au moins une unité centrale de traitement (9),
exploitation des données transférées dans l'unité centrale de traitement (9) en fonction de critères d'exploitation définis,
transfert des données exploitées en fonction de leur importance dans les dispositifs de sortie (11-13) dans la chaîne de production (10) et/ou dans les postes (2, 3) situés en aval de la chaîne de production, et
sortie des données exploitées en fonction de critères de sortie définis via les dispositifs de sortie (11-13),
le transfert de données entre les appareils d'entrée fixes et mobiles (4-8) et l'unité centrale de traitement (9) et/ou entre l'unité centrale de traitement (9) et les dispositifs de sortie (11-13) se faisant via une liaison radio, **caractérisé en ce que** les données exploitées sont affichées sur les dispositifs de sortie (11) affectés au poste de travail respectif (1) de la chaîne de production (10) au moins en fonction de la fréquence du défaut et/ou du type de défaut et/ou de l'emplacement du défaut sur le produit par rapport aux étapes de travail à effectuer sur le poste de travail (1).

13. Procédé selon la revendication 12, **caractérisé en ce que** les données sur les défauts apparus, respectivement les réclamations concernant le produit respectif sont saisies dans les appareils d'entrée fixes et/ou mobiles (4-8), une identification électronique de produit étant effectuée au préalable par l'appareil d'entrée (4-8) par lecture d'un code d'identification mémorisé sur le produit.

14. Procédé selon l'une quelconque des revendications 12 ou 13, **caractérisé en ce que** des pièces et/ou des ensembles de pièces du produit et/ou le produit sont mémorisés graphiquement dans les appareils d'entrée (4-8) et affichés sur un dispositif d'affichage (21) des appareils d'entrée (4-8) et les données sur les défauts apparus ou les réclamations sont saisies par entrée via un écran tactile en pressant sur la pièce ou l'ensemble de pièces ou le produit affiché(e).

15. Procédé selon la revendication 14, **caractérisé en ce que** les pièces, les ensembles de pièces et le produit sont représentés en deux ou trois dimensions sur le dispositif d'affichage (21).

16. Procédé selon l'une quelconque des revendications 12 à 15, **caractérisé en ce que** les données sur les défauts apparus ou les réclamations sont saisies dans les appareils d'entrée fixes et/ou mobiles (4-8) en interrogeant un menu.

17. Procédé selon l'une quelconque des revendications 12 à 16, **caractérisé en ce que** les données sur les défauts apparus ou les réclamations sont saisies, indépendamment du poste de travail (1) qui en est la cause, dans la chaîne de production (10) ainsi que dans les postes (2, 3) situés en aval de la chaîne de production.

18. Procédé selon l'une quelconque des revendications 12 à 17, **caractérisé en ce** les données transférées sont exploitées dans l'unité d'exploitation (9) au moins en fonction du type de défaut et/ou de la fréquence du défaut et/ou de l'emplacement du défaut apparu dans la chaîne de production (10) et/ou de l'emplacement du défaut apparu sur le produit et/ou de la période d'apparition et/ou par rapport au produit.

19. Procédé selon l'une quelconque des revendications 12 à 18, **caractérisé en ce** les données exploitées sont délivrées par les dispositifs de sortie (11-13) au moins en fonction du type de défaut et/ou de la fréquence du défaut et/ou de l'emplacement du défaut apparu dans la chaîne de production (10) et/ou de l'emplacement du défaut apparu sur le produit et/ou de la période d'apparition et/ou par rapport au produit.

20. Procédé selon l'une quelconque des revendications 12 à 19, **caractérisé en ce que** le produit, respectivement des pièces du produit sont représentées graphiquement sur le dispositif de sortie (11) du poste de travail respectif (1) par rapport aux étapes de travail à effectuer dans le poste de travail (1) et les défauts apparus dans le poste de travail (1) ou les réclamations sont représentés sur la représentation graphique du produit, respectivement de la pièce de produit.

21. Procédé selon l'une quelconque des revendications 12 à 20, **caractérisé en ce que** les données exploitées sont délivrées par rapport au produit par les dispositifs de sortie (12, 13) des postes (2, 3) situés en aval de la chaîne de production.
